# EUROPEAN PATENT SPECIFICATION

(11) **EP 1 244 194 B1**
(45) Date of publication and mention of the grant of the patent: **25.07.2007**
(21) Application number: 02005042.3
(22) Date of filing: 06.03.2002
(51) Int. Cl.: H02K 3/28

(54) **Manufacture method of a vehicle alternator with a desired output characteristic, by selecting the connection point of a combined star-polygon stator winding**
Herstellungsverfahren eines Wechselstromgenerators mit vorbestimmter Ausgangscharakteristik, durch die Auswähl des Verbindungspunkts einer Stern-Polygon-Statorwicklung
Procédé de fabrication d'un alternateur pour véhicules automobiles avec caractéristique de sortie voulue, par selection d'un point de connexion de l'enroulement de type combiné étoile-polygone

(30) Priority: 23.03.2001 JP 2001084685
(43) Date of publication of application: 25.09.2002
(73) Proprietor: DENSO CORPORATION, Kariya-city, Aichi-pref. 448-8661 (JP)
(72) Inventor: Umeda, Atsushi, c/oDenso Corporation, Kariya-city, Aichi-pref., 448-8661 (JP)
(74) Representative: Kuhnen & Wacker

(56) References cited:
- EP-A- 0 018 835
- EP-A- 0 534 153
- EP-A- 0 828 335
- DE-C- 416 662
- US-A- 5 122 705
- US-A- 5 998 903
- PATENT ABSTRACTS OF JAPAN vol. 005, no. 205 (E-088), 25 December 1981 (1981-12-25) & JP 56 125955 A (TOSHIBA CORP), 2 October 1981 (1981-10-02)

## Description

The present invention relates to a method of manufacturing an AC generator for vehicles.

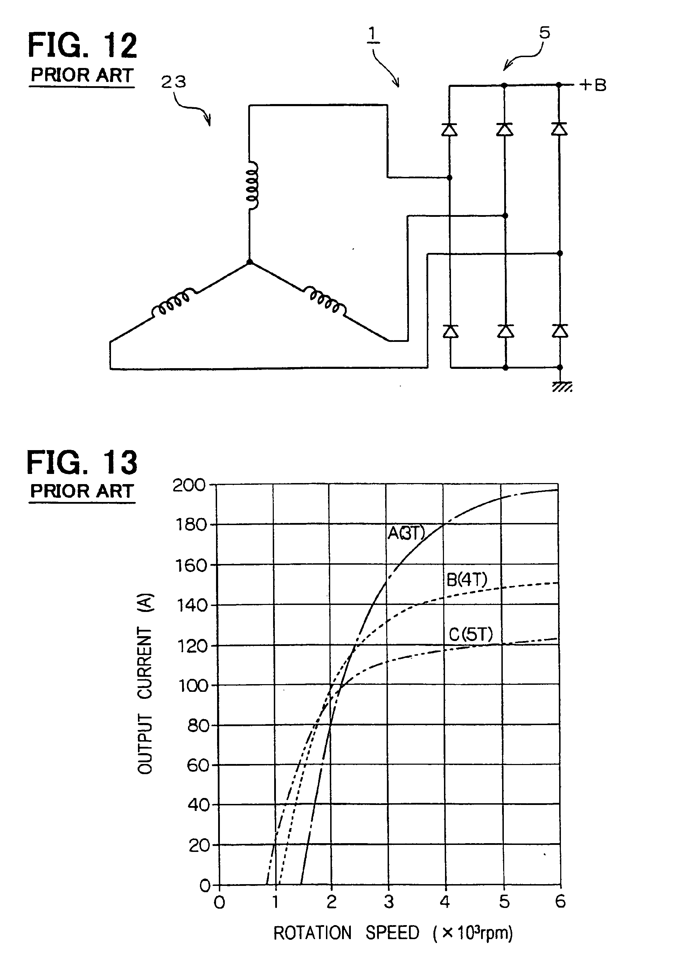

A vehicular alternator (alternating current generator) is required to be small-sized and capable of supplying required power in low-speed rotations or high-speed rotations. The number of turns of a stator winding of a vehicular alternator is changed to meet such needs. However, when only the number of turns (T) of the stator windings is changed in a conventional vehicular alternator 1 having a Y-connected stator winding 23 and a rectifier device 5 as shown in Fig. 12, the output characteristics of the alternator changes as shown in Fig. 13. In Fig. 13, respective characteristics curves A, B and C show the output characteristic of the vehicular alternator when the number of turns (T) of the stator winding 23 is set to 3, 4 and 5. As the number of turns is changed from one integer number of turns to another integer number of turns, the output characteristic is stepwisely changed. Therefore, a desired output characteristic cannot be achieved.

From EP 0 18 835 A1 electric motors and generators are known having star-connected stator winding components and delta-connected winding components which can be connected in a pure star configuration or a pure delta configuration or a combined delta/star-configuration in order to minimize certain harmonics in the resultant three-phase-field.

JP 56 125 955 A discloses a variable speed electric motor having lead out tabs of its phase windings which allow a configuration of the stator winding in form of a side line extended delta for selecting a suitable torque characteristic.

It is an object of the present invention to provide a method of manufacturing an AC generator for vehicles for achieving a desired output characteristic smoothly.

This object, in accordance with the present invention, is achieved by a method as defined in claim 1.

Advantageous embodiments are subject matter of claims 2 to 5.

Thus, produced by the method of the present invention, the rotary electric machine has a multi-phase winding comprising a plurality of phase windings wound in a plurality of slots of a stator core at predetermined intervals. The multi-phase winding is formed by cyclically connecting one end of one phase winding to a middle point other than both ends of another phase winding. Thus, the phase windings form both the Δ-connection and the Y-connection in the stator winding arrangement. The windings connected in Δ-connection are substantially equivalent to windings connected in Y-connection having a number of turns multiplied by 1/√3. Therefore, the number of turns of the multi-phase winding in conversion with that of Y-connection is equivalent to the number of turns of Y-connection portion added with a number of turns produced by multiplying a number of turns of the Δ-connection portion by 1/√3. Therefore, by only changing a position of the middle point connected with two of the phase windings, a ratio of number of turns of the Y-connection portion to the Δ-connection portion can be changed at small intervals.

Particularly, in changing the ratio, only the position of the middle point constituting the portion of connecting two of the phase windings is changed. Therefore, it is not necessary to considerably change a manufacturing facility and the cost can be reduced in accordance with simplification of the manufacturing facility.

The above and other objects, features and advantages of the present invention will become more apparent from the following detailed description made with reference to the accompanying drawings. In the drawings:
Fig. 1 is a sectional view showing an embodiment of a vehicular alternator according to the present invention;
Fig. 2 is a wiring diagram showing connection of a stator winding and a rectifier device in the embodiment;
Fig. 3 is a perspective view showing conductor segments of the stator winding in the embodiment;
Fig. 4 is a perspective view showing a state of integrating the conductor segments in the embodiment;
Fig. 5 is a partial sectional view showing a stator in the embodiment;
Fig. 6 is a partial perspective view showing the stator shown in the embodiment;
Fig. 7 is a partial perspective view showing the stator in the embodiment;
Fig. 8 is a graph showing an output characteristic of the vehicular alternator according to the embodiment;
Fig. 9 is a wiring diagram showing a vehicular alternator using two sets of three-phase windings having a phase difference of π/6 in electric angle according to a modification of the embodiment;
Fig. 10 is a wiring diagram showing a stator winding using two kinds of phase windings having a phase difference of π/6 in electric angle according to another modified embodiment;
Fig. 11 is a wiring diagram showing a stator winding using two kinds of phase windings having a phase difference of π/6 in electric angle according to a further modified embodiment;
Fig. 12 is a wiring diagram showing a conventional vehicular alternator; and
Fig. 13 is a graph showing an output characteristic of the conventional vehicular alternator.

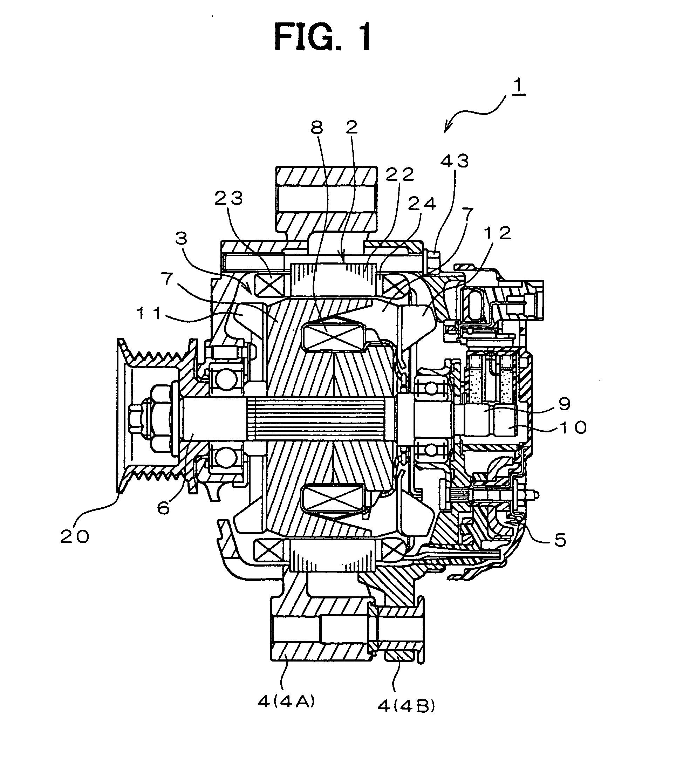

Referring first to Fig. 1, a vehicular alternator 1 includes a stator 2, a rotor 3, a frame 4, a rectifier device 5 and the like.

The stator 2 includes a stator core 22, a stator winding 23 mounted on the stator core 22, and an insulator 24 for electrically insulating the stator core 22 from the stator winding 23. The stator core 22 is constituted by stacking thin steel plates and formed with a plurality of slots on a peripheral side of a shape of a circular ring.

The rotor 3 is rotatable integrally with a shaft 6 and includes a Lundell-type pole core 7, a field winding 8, slip rings 9 and 10, a mixed flow fan 11 and a centrifugal fan 12 for cooling and the like. The shaft 6 is connected to a pulley 20 and is driven to rotate by an engine (not illustrated) mounted to a vehicle.

The frame 4 contains the stator 2 and the rotor 3, supports the rotor 3 in a rotatable state about the shaft 6 and is fixed with the stator 2 arranged on an outer peripheral side of the pole core 7 of the rotor 3 with a predetermined clearance therebetween. The frame 4 comprises a front frame 4A and a rear frame 4B, which are fastened by a plurality of fastening bolts 43 to thereby support the stator 2 and the like. The rectifier device 5 is connected with lead wires extended from the stator windings 23 for subjecting three-phase alternating current voltages applied from the stator windings 23 to three-phase full-wave rectification to convert into direct current voltage.

According to the vehicular alternator 1 having the above structure, when rotational force is transmitted from the engine (not illustrated) to the pulley 20 via a belt or the like, the rotor 3 is rotated in a predetermined direction. By applying excitation voltage from outside to the field winding 8 of the rotor 3 under the state, the respective claw-like magnetic pole portions of the pole core 7 are excited, three-phase alternating current voltages can be generated at the stator windings 23 and predetermined direct current power is outputted from an output terminal of the rectifier device 5.

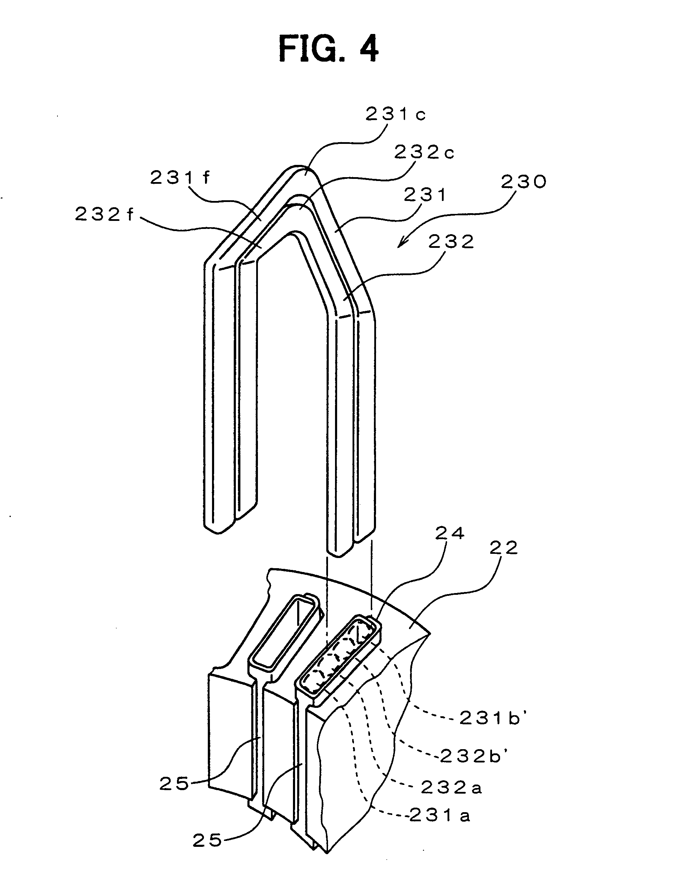

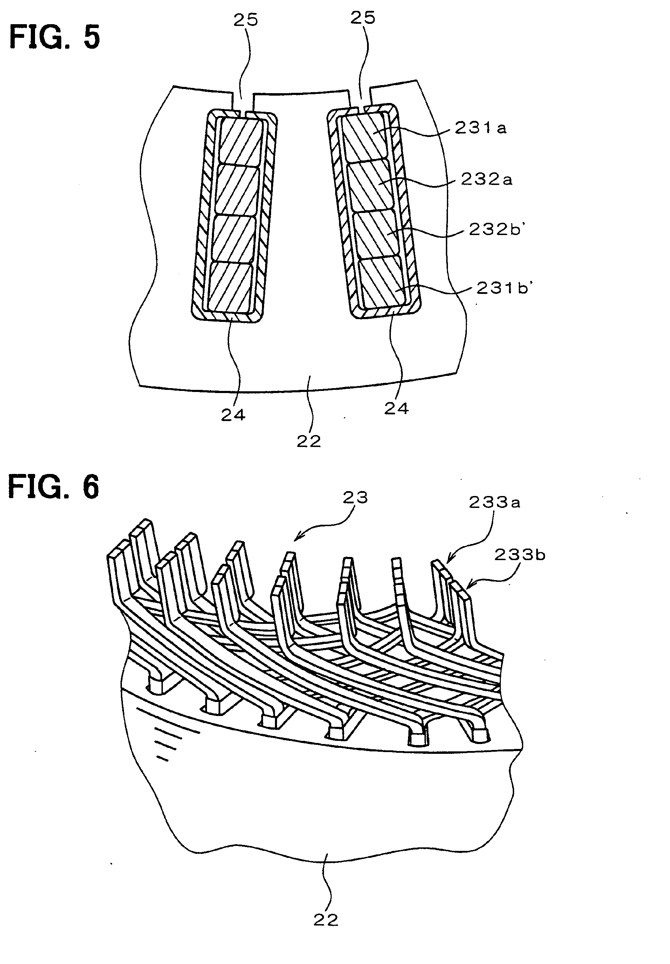

The vehicular alternator 1 is wound with three-phase windings comprising three of phase windings of full-pitch winding having phase differences of 120° in electric angle thereamong as the stator winding 23. For example, the number of the magnetic poles is 16, and in correspondence therewith the number of slots 25 (Figs. 4 and 5) of the stator 2 is set to 48.

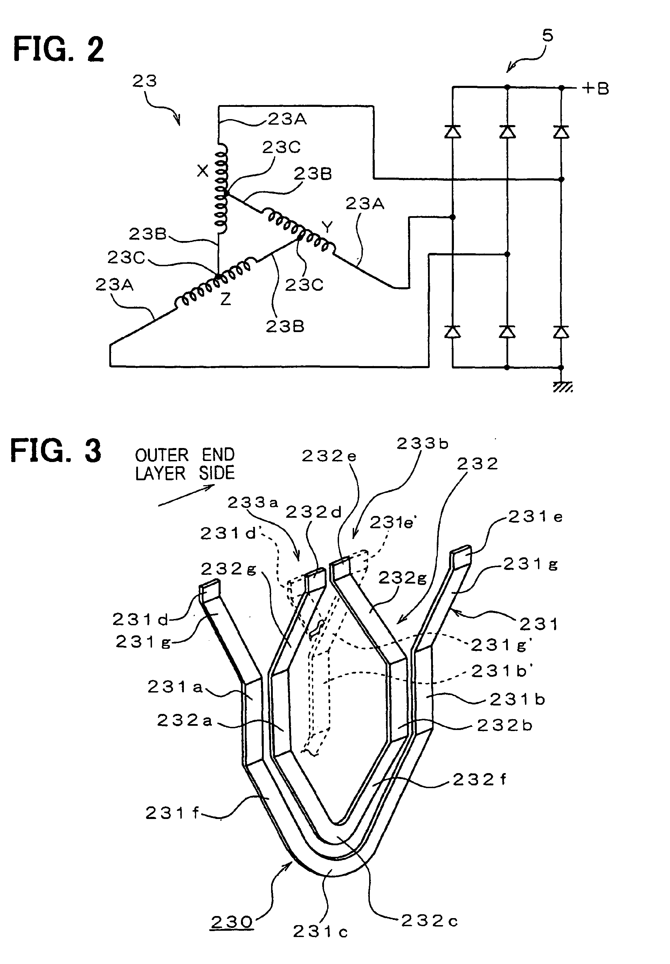

The number of turns of each of the three-phase windings are equal to one another, and each of the slots 25 of the stator core 22 contains an equal number of winding conductors (Figs. 3 and 4). For example, according to the embodiment, 4 pieces of electric conductors are contained in the respective slot 25. Generally, "number of turns" is defined as the number of conductors connected in series per pole. However, practically, the rotary machine characteristics, that is defined by adding together in series by a number of poles, are determined by a total number of the conductors. Therefore, the number of series-connected conductors (pole number × number of turns) is used in the following description. In the case of 16 poles and a number of turns per slot of 4, the series conductor number becomes 64.

As shown in Fig. 2, the respective phase winding is provided with a middle point 23C, which is not necessarily a half-way point but may be any point other than a winding start end 23A and a winding finish end 23B. The middle point 23C of the respective phase winding is connected to the winding start end 23A or the winding finish end 23B of other phase winding. According to the embodiment, when respective phases of the three-phase windings are defined as X-phase, Y-phase and Z-phase, the middle point 23C of the phase winding of X-phase and the winding finish end 23B of the phase winding of Y-phase are connected. Similarly, the middle point 23C of the phase winding of Y-phase and the winding finish end 23B of the phase winding of Z-phase are connected. The middle point 23C of the phase winding of Z-phase and the winding finish end 23B of the phase winding of X-phase are connected. That is, the middle point of each phase winding is connected to the winding finish end of another phase winding cyclically, in the clockwise direction in Fig. 2.

Further, according to the respective phase winding, the position of the middle point 23C is set such that in the series conductor number "64", "48" is constituted by from the winding start end 23A to the middle point 23C and "16" is constituted by from the middle point 23C to the winding finish end 23B. After the above connection has been carried out, lead wires extended from the winding start ends 23A of the respective phase windings are connected to the rectifier device 5.

The stator winding 23 is constructed as shown in Fig. 3 and arranged in the stator 22 as shown in Figs. 4-7.

The stator winding 23 mounted in the slot 25 of the stator core 22 is constituted by a plurality of electric conductors and the respective slot 25 contains an even number (4 pieces according to the embodiment) of electric conductors. Further, 4 electric conductors in the single slot 25 are aligned in one row in an order of an inner end layer, an inner middle layer, an outer middle layer and an outer end layer from an inner side with respect to a diameter direction of the stator core 22 as shown in Fig. 3 and Fig. 4.

An electric conductor 231a of an inner end layer at inside of one slot 25 is paired with an electric conductor 231b of an outer end layer at inside of other slot 25 of the stator core 22 remote from the electric conductor 231a by one magnetic pole pitch (3 slots) in the clockwise direction. Similarly, an electric conductor 232a of an inner middle layer at inside of one slot 25 is paired with an electric conductor 232b of an outer middle layer at inside of other slot 25 of the stator core 22 remote from the electric conductor 232a by one magnetic pole pitch in the clockwise direction. Further, the paired electric conductors are connected by using continuous lines on one end face side in an axial direction of the stator core 22 by way of turn portions 231c and 232c.

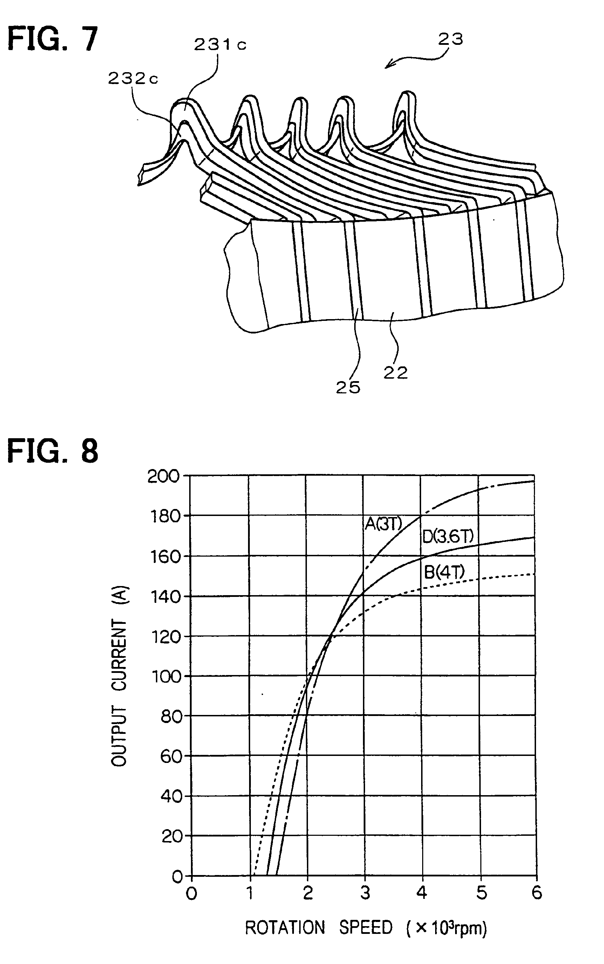

Therefore, on the one end face side of the stator core 22, as shown in Fig. 7, the continuous line for connecting the electric conductor 231b of the outer end layer and the electric conductor 231a of the inner end layer by way of the turn portion 231c, incorporates the continuous line connecting the electric conductor 232b of the outer middle layer and the electric conductor 232a of the inner middle layer by way of the turn portion 232c. In this way, on the one axial end side of the stator core 22, the turn portion 232c as a connecting portion of the paired electric conductors is surrounded by the turn portion 231c as a connecting portion of the other paired electric conductors contained at inside of the same slot 25. By connecting the electric conductor 232b of the outer middle layer and the electric conductor 232a of the inner middle layer, a middle layer coil end is formed. By connecting the electric conductor 231b of the outer end layer and the electric conductor 231a of the inner end layer, an end layer coil end is formed.

Meanwhile, the electric conductor 232a of the inner middle layer at inside of one slot 25 is also paired with an electric conductor 231a' of an inner end layer at inside of other slot 25 of the stator core 22 remote from the electric conductor 232a by one magnetic pole pitch in the clockwise direction. Similarly, an electric conductor 231b' of an outer end layer at inside of one slot 25 is also paired with the electric conductor 232b of the outer middle layer at inside of other slot 25 of the stator core 22 remote from the electric conductor 231b' by one magnetic pole pitch in the clockwise direction. Further, these electric conductors are connected on other end face side in the axial direction of the stator core 22.

Therefore, on the other axial end face side of the stator core 22, as shown in Fig. 6, there are arranged an outer side joint portion 233b for connecting the electric conductor 231b' of the outer end layer and the electric conductor 232b of the outer middle layer, and an inner side joint portion 233a for connecting the electric conductor 231a' of the inner end layer and the electric conductor 232a of the inner middle layer in a state of being shifted from each other in a diameter direction and a peripheral direction. By connecting the electric conductor 231b' of the outer end layer and the electric conductor 232b of the outer middle layer and connecting the electric conductor 231a' of the inner end layer and the electric conductor 232a of the inner middle layer, there are formed two continuous layer coil ends arranged on different concentric circles.

Further, as shown in Fig. 3, the electric conductor 231a of the inner end layer and the electric conductor 231b of the outer end layer are provided by a large segment 231 constituted by forming a series of the electric conductors substantially in a U-like shape. Further, the electric conductor 232a of the inner middle layer and the electric conductor 232b of the outer middle layer are provided by a small segment 232 constituted by forming a series of the electric conductors substantially in the U-like shape. A conductor segment 230 in the U-like shape constituting a base unit is formed with the large segment 231 and the small segment 232.

The respective segments 231 and 232 are provided with portions contained at inside of the slot 25 and extended along the axial direction and slanted portions 231f, 231g, 232f and 232g as bent portions extended to incline by predetermined angles relative to the axial direction. By the slanted portions, there are formed a group of coil ends projected from the stator core 22 to the both end faces in the axial direction. Flow paths of cooling wind produced when the mixed flow fan 11 and the centrifugal fan 12 attached to both end faces in the axial direction of the rotor 3 are rotated are mainly formed among the slanted portions. Further, the flow paths of cooling wind are arranged also with lead wires of the stator winding 23.

The above construction is applied to the conductor segments 230 of all the slots 25. Further, in a group of coil ends on a nonturn portion side, an end portion 231e' of the outer end layer and an end portion 232e of the outer middle layer as well as an end portion 232d of the inner middle layer and an end portion 231d' of the inner end layer are joined respectively by means of welding, ultrasonic welding, arc welding, soldering or the like to thereby form the outer side joint portion 233b and the inner side joint portion 233a and electrically connected.

The stator winding 23 included in the stator 2 of the vehicular alternator 1 according to the embodiment is provided with a Δ-connection portion formed by using portions of the respective phase winding by cyclically connecting the middle point 23C of one phase winding and the winding finish end 23b of other phase winding for all the phase windings. As is well known, a line voltage generated at the Δ-connection portion becomes 1/√3 (square root of 3) times as much as a line voltage generated at the Y-connection portion. That is, the Δ-connection portion is equivalent to the Y-connection portion of a series conductor number having a multiplication factor of 1/√3.

Therefore, according to the embodiment, the series conductor number of the Δ-connection portion becomes 9.2 (= 16 × (1/√3)) pieces equivalently in conversion to that of the Y-connection. The Y-connection portion having the series conductor number of 48 is connected in series with the Δ-connection portion. Therefore, the series conductor number of a total of the stator winding 23, becomes 57.2 pieces equivalently in conversion to that of the Y-connection. In this way, while the number of conductors at inside of the slot 25 stays to be 4 pieces for all the slots 25, the substantial series conductor number can be changed from 64 in the case of the conventional Y-connection which is not provided with the Δ-connection portion to 57.2 (in correspondence with 3.6 turns).

Fig. 8 is a graph showing an output characteristic of the vehicular alternator according to the embodiment. In this figure, characteristic curves A and B show output characteristics of the conventional vehicular alternator when the number of turns of the stator winding connected by Y-connection is set to 3 and 4. Characteristic curve D shows an output characteristic of the vehicular alternator 1 according to the embodiment in correspondence with 3.6 turns. In this way, according to the vehicular alternator 1 of the embodiment, there can be provided an intermediary output characteristic for smoothing stepwise output characteristics change provided in the case of using the stator winding having number of turns of integer values as in the conventional vehicular alternator.

Further, by changing the position of the middle point 23C of the respective phase windings included in the stator winding 23, a rate of respective series conductor numbers (number of turns) of the Δ-connection portion and the Y-connection portion, can arbitrarily be changed. Therefore, the substantial series conductor number in the case of being converted into Y-connection can arbitrarily be changed. That is, the respective phase windings included in the stator winding 23 are constituted by connecting 64 pieces of the conductor segments 230 in series. Therefore, the positions of the middle points 23C can be changed in 64 ways and 64 ways of output characteristics can be provided by changing the positions of the middle points 23C. Therefore, there is remarkably promoted a degree of freedom of changing the output characteristic which can be changed only stepwisely by changing the number of turns conventionally.

Further, since the number of conductors at inside of the slot 25 is set to the same number "4", a pertinent winding occupying rate can be set for all the slots 25, even when vibration is applied from outside, the conductors at inside of the slot 25 can be prevented from being vibrated considerably and reliability of the vehicular alternator 1 can be promoted.

Further, in the case of changing the number of turns to make the output characteristic variable as in the conventional machine, normally, in order to make the occupying rate constant, a sectional area of the conductor is changed. Therefore, in accordance with the change, many kinds of wiring jigs need to be prepared. However, according to the embodiment, the output characteristic can be made variable without changing the number of pieces of the conductors at inside of the slot 25. Therefore, the stator winding 23 can be manufactured by using one kind of winding jig. Thus, a manufacturing facility can be simplified. Further, the conductor (conductor segment 230) to be prepared may only be of one kind. Therefore, steps can be simplified and cost can be reduced by reducing a number of parts.

Further, according to the vehicular alternator 1 using the conductor segment 230 as in the embodiment, the shape of the coil end of the stator 2 can be aligned as shown in Fig. 6 and Fig. 7. Therefore, the winding occupying rate in the slot 25 can be promoted and a length of the coil can be shortened. Therefore, resistance of the stator winding 23 can be reduced, and high output formation and high efficiency formation can be constituted. Particularly, in the case of using the conductor segment 230, when the output characteristic is intended to change by changing the number of turns as in the conventional machine, in accordance with the change in the number of pieces of the conductor segments 230, the number of points of connecting the conductor segments 230 and the number of times of folding to bend the conductor segments 230 need to change and the output characteristic cannot substantially be changed by the same facility. However, according to the vehicular alternator 1 of the embodiment, by only changing the position of connecting the wires, the output characteristic can be changed by making the substantial series conductor number variable.

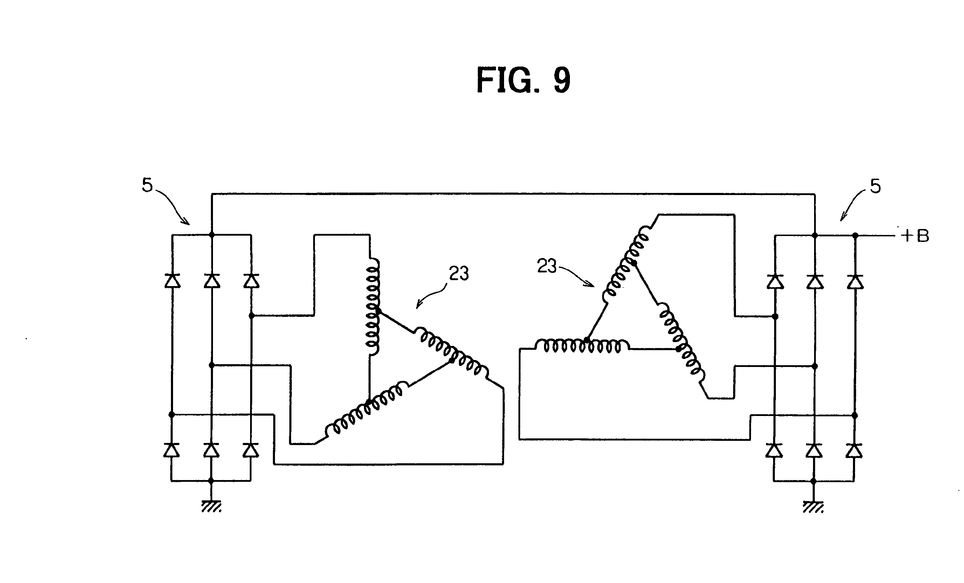

Further, the above embodiment but can be modified in various ways. For instance, as shown in Fig. 9, the vehicular alternator 1 may be modified to have stator windings 23 comprising two sets of three-phase windings having a phase difference of π/6 in electric angle therebetween. For example, according to respectives of the two sets of three-phase windings, a rate of a series conductor number between a middle point and a winding start end of respective phase winding, to a series conductor number between the middle point and the winding finish end, and a method of connection are set to be the same. Further, lead wires extended from the respective three-phase windings are connected to separate full-wave rectifying circuits included in the rectifier device 5.

According to the vehicular alternator having such a construction, current flowing in respectives of two sets of three-phase windings is provided with a phase difference of π /6 in electric angle. Therefore, counter magnetomotive force of the respective three-phase windings is cancelled by each other and magnetic noise can be reduced. Further, since there are two sets of the three-phase windings, a manufacturing facility which is liable to be complicated can be simplified and the cost can be reduced.

Further, although according to the above-described modified example, the magnetic noise is reduced by using the two sets of three-phase windings having the phase difference of π /6 in electric angle thereamong, the magnetic noise may be reduced by constituting one set of three-phase windings by using two kinds of phase windings having a phase difference of π/6 in electric angle thereamong.

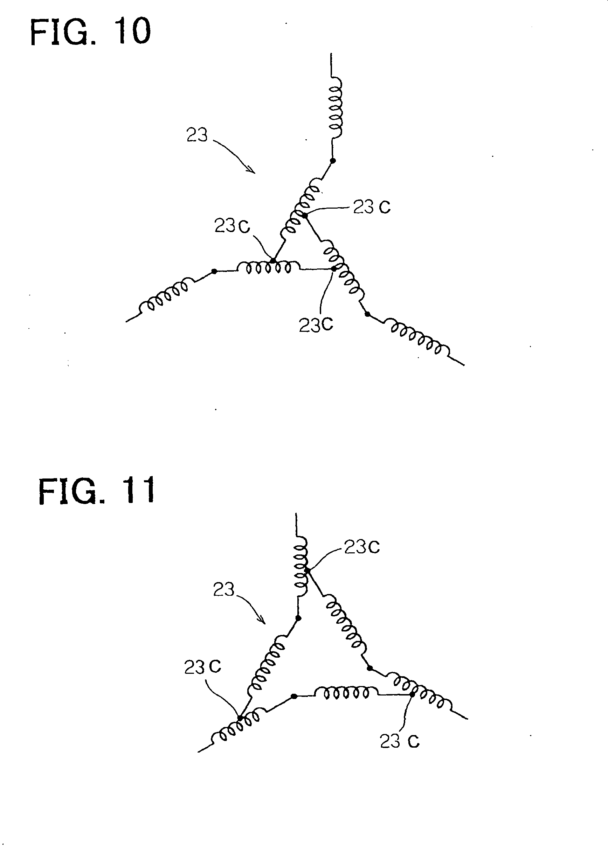

The embodiment may further be modified as shown in Fig. 10 and Fig. 11, so that the alternator has two kinds of phase windings having a phase difference of π/6 in electric angle. In the modification of Fig. 10, the middle point 23C is set at inside of each phase winding arranged on a side opposed to the lead wire. In the modification of Fig. 11, the middle point 23C is set to inside of a phase winding arranged on a side of the lead wire. By making the position of the middle point variable, the substantial series conductor number in the case of being converted into Y-connection can be changed and the output characteristic of the vehicular alternator can be changed. Further, since there are used the two kinds of phase windings having the phase difference of π/6 in electric angle thereamong, the counter-magnetomotive force of the respective phase windings is cancelled by each other and the magnetic noise of the vehicular alternator can be reduced.

Further, the middle point of one phase winding and the winding start end of other phase winding may be connected and a side of the winding finish end may be connected to the rectifier device. The above arrangement may be applied to other types of vehicular rotary electric machines, for example, a motor.

## Claims

1. Method of manufacturing an AC generator for vehicles to achieve desired output characteristics, said generator (1) comprising a magnetic field generating winding (8) on a multi-pole rotor (3), a stator having a stator core (22) with a plurality of slots (25), comprising a plurality of full-pitch turns formed of U-shaped conductors (230) provided in said slots (25), said conductors (230) being groupwise series-connected to form composite phase windings (23, X, Y, Z) having two sections with 30° electrical angle phase difference, the generator having three of such composite phase windings (23, X, Y or Z) of respective 120° electrical angle phase difference, connected in a star-delta configuration, said each phase winding (23, X, Y, Z) having an inner terminal (23B) and an outer terminal (23A) as its respective ends, the outer terminals (23 A) of said composite phase windings (23, X, Y, Z) being connected to a three-phase rectifier circuit (5), said method comprising the steps of:
forming each composite phase winding (23, X, Y, Z) by series connecting said plurality of full-pitch turns formed of U-shaped conductors (230), provided in said slots (25);
selecting, in accordance with a desired output characteristic, the intermediate connection point (23C) of one of said sections to which the inner terminal (23B) of each set of said phase winding (23, X, Y, Z) will connect to on the neighbouring phase winding (23, X, Y, Z), at any point other than a section winding start end or winding finish end; and
connecting the inner terminal (23B) of each phase winding (23, X, Y, Z) with the selected intermediate connection terminal (23C) of a neighbouring phase winding (23, X, Y, Z) in a cyclic manner.

2. Method in accordance with claim 1, **characterized by** providing, in each of the slots (25), an equal number of conductor segments of said U-shaped conductors (230).

3. Method in accordance with claims 1 or 2, **characterized in that** said U-shaped conductors (230) are connected together through respective end portions.

4. Method in accordance with one of the claims 1 to 3, **characterized in that** said conductor segments of the U-shaped conductors (230) each have rectangular cross-section shape.

5. Method in accordance with claim 4, **characterized by** providing the electric conductor segments of the U-shaped conductors substantially with equal crosssectional shape.

## Patentansprüche

1. Verfahren zum Herstellen eines Wechselstromgenerators für Fahrzeuge, um gewünschte Abgabecharakteristika zu erreichen, wobei der Generator (1) eine ein Magnetfeld erzeugende Wicklung (8) auf einem Multipolrotor (3) aufweist, einen Stator mit einem Statorkern (22) mit einer Mehrzahl von Schlitzen (25), der eine Mehrzahl von ungesehnten bzw. Durchmesser-Windungen aufweist, die aus U-förmigen Leitern (230) gebildet sind, die in den Schlitzen (25) angeordnet sind, wobei die Leiter (230) gruppenweise in Reihe geschaltet sind, um zusammengesetzte Phasenwicklungen (23, X, Y, Z) auszubilden, die zwei Abschnitte mit einer Phasendifferenz mit einem elektrischen Winkel von 30° aufweisen, wobei der Generator drei solcher zusammengesetzten Phasenwicklungen (23, X, Y oder Z) von jeweils einer Phasendifferenz mit einem elektrischen Winkel von 120° aufweist, die in einer Stern-Dreieckanordnung verbunden sind, wobei jede Phasenwicklung (23, X, Y, Z) einen inneren Anschluss (23B) und einen äußeren Anschluss (23A) an ihren jeweiligen Enden aufweist, wobei die äußeren Anschlüsse (23A) der zusammengesetzten Phasenwicklungen (23, X, Y, Z) mit einer Dreiphasen-Gleichrichterschaltung (5) verbunden sind, wobei das Verfahren folgende Schritte aufweist:
Ausbilden einer jeweiligen zusammengesetzten Phasenwicklung (23, X, Y, Z) durch in Reihe Schalten der Mehrzahl von Durchmesser-Windungen, die aus U-förmigen Leitern (230) gebildet sind, die in den Schlitzen (25) angeordnet sind;
Auswählen, gemäß einer gewünschten Abgabecharakteristik, des Zwischenverbindungspunkts (23C) von einem der Abschnitte, mit dem der innere Anschluss (23B) eines jeweiligen Satzes der Phasenwicklung (23, X, Y, Z) sich auf der benachbarten Phasenwicklung (23, X, Y, Z) verbindet, an einem beliebigen Punkt außer einem Abschnitt am Ende des Wicklungsanfangs oder am Ende des Wicklungsabschlusses; und zyklisches Verbinden des inneren Anschlusses (23B) einer jeweiligen Phasenwicklung (23, X, Y, Z) mit dem ausgewählten Zwischenverbindungsanschluss (23C) einer benachbarten Phasenwicklung (23, X, Y, Z).

2. Verfahren nach Anspruch 1, **gekennzeichnet durch** Bereitstellen, in jedem der Schlitze (25), einer entsprechenden Anzahl von Leitersegmenten der U-förmigen Leiter (230).

3. Verfahren nach Anspruch 1 oder 2, **gekennzeichnet dadurch, dass** die U-förmigen Leiter (230) miteinander durch jeweilige Endabschnitte verbunden sind.

4. Verfahren nach einem der Ansprüche 1 bis 3, **gekennzeichnet dadurch, dass** die Leitersegmente der U-förmigen Leiter (230) jeweils einen rechtwinkeligen Querschnitt aufweisen.

5. Verfahren nach Anspruch 4, **gekennzeichnet durch** Versehen der elektrischen Leitersegmente der U-förmigen Leiter im Wesentlichen mit einer entsprechenden Querschnittsform.

## Revendications

1. Procédé de fabrication d'un générateur c.a. pour véhicules pour obtenir des caractéristiques de sortie voulues, ledit générateur (1) comprenant un enroulement générateur de champ magnétique (8) sur un rotor multipolaire (3), un stator ayant un noyau de stator (22) avec une pluralité d'encoches (25), comprenant une pluralité de spires à pas diamétraux formées de conducteurs en forme de U (230) fournis dans lesdites encoches (25), lesdits conducteurs (230) étant reliés en série en groupe pour former des enroulements de phase composites (23, X, Y, Z) ayant deux sections avec une différence de phase de 30° d'angle électrique, le générateur ayant trois de tels enroulements de phase composites (23, X, Y ou Z) avec une différence de phase respective de 120° d'angle électrique, raccordés dans une configuration étoile-triangle, chacun desdits enroulements de phase (23, X, Y, Z) ayant une borne intérieure (23B) et une borne extérieure (23A) en ses extrémités respectives, les bornes extérieures (23A) desdits enroulements de phase composites (23, X, Y, Z) étant raccordées à un circuit redresseur triphasé (5), ledit procédé comprenant les étapes consistant à :
former chaque enroulement de phase composite (23, X, Y, Z) en raccordant en série ladite pluralité de spires à pas diamétraux formées de conducteurs en forme de U (230), fournis dans lesdites encoches (25) ;
sélectionner, en fonction d'une caractéristique de sortie voulue, le point de connexion intermédiaire (23C) de l'une desdites sections auquel la borne intérieure (23B) de chaque ensemble desdits enroulements de phase (23, X, Y, Z) sera raccordée sur l'enroulement de phase voisin (23, X, Y, Z), en n'importe quel point autre que l'extrémité de début d'enroulement de la section ou que l'extrémité de fin d'enroulement ; et
raccorder de manière cyclique la borne intérieure (23B) de chaque enroulement de phase (23, X, Y, Z) à la borne de connexion intermédiaire sélectionnée (23C) d'un enroulement de phase voisin (23, X, Y, Z).

2. Procédé selon la revendication 1, **caractérisé par** l'étape consistant à fournir, dans chacune des encoches (25), un nombre égal de segments conducteurs desdits conducteurs en forme de U (230).

3. Procédé selon la revendication 1 ou 2, **caractérisé en ce que** lesdits conducteurs en forme de U (230) sont raccordés ensemble par l'intermédiaire de parties d'extrémité respectives.

4. Procédé selon l'une quelconque des revendications 1 à 3, **caractérisé en ce que** lesdits segments conducteurs des conducteurs en forme de U (230) ont chacun une forme de section transversale rectangulaire.

5. Procédé selon la revendication 4, **caractérisé par** l'étape consistant à fournir les segments conducteurs électriques des conducteurs en forme de U sensiblement avec une forme de section transversale égale.
